# EUROPÄISCHE PATENTSCHRIFT

(11) **EP 2 773 699 B1**
(45) Veröffentlichungstag und Bekanntmachung des Hinweises auf die Patenterteilung: **02.03.2016**
(21) Anmeldenummer: 12808239.3
(22) Anmeldetag: 02.11.2012
(51) Int. Cl.: C08L 63/00, C08G 8/28, C08K 5/5313, C08K 5/5398, C08K 5/5377

(54) **FLAMMHEMMEND MODIFIZIERTE NOVOLAKE**
NOVOLAKS MODIFIED AS FLAME RETARDERS
NOVOLAKS MODIFIÉS DE FAÇON IGNIFUGEANTE

(30) Priorität: 02.11.2011 AT 16042011
(43) Veröffentlichungstag der Anmeldung: 10.09.2014
(73) Patentinhaber: Metadynea Austria GmbH, 3500 Krems (AT)
(72) Erfinder: ZICH, Thomas, A-4020 Linz (AT); FREIDL, Fritz, Johann, A-3500 Krems (AT); MEHOFER, Bernadette, A-3500 Krems (AT); DÖRING, Manfred, 76744 Wörth am Rhein (DE); CIESIELSKI, Michael, 06217 Merseburg (DE)
(74) Vertreter: Verbart, Jeannette J.M.
(86) Internationale Anmeldenummer: PCT/AT2012/050171
(87) Internationale Veröffentlichungsnummer: WO 2013/063635

(56) Entgegenhaltungen:
- EP-A1- 0 413 167
- EP-A1- 2 562 195
- WO-A2-2010/114279
- J Y SHIEH ET C S WANG: "Synthesis and Properties of Novel Phosphorus-Containing Hardener for Epoxy Resins", JOURNAL OF APPLIED POLYMER SCIENCE, Bd. 78, 2000, Seiten 1636-1644, XP002692979, NEW YORK in der Anmeldung erwähnt

## Beschreibung

Die Erfindung betrifft neue, mit Flammschutzgruppierungen modifizierte Novolake, ein Herstellungsverfahren dafür sowie deren Verwendung als Flammschutzmittel.

Aus der Literatur ist bekannt, dass 9,10-Dihydro-9-oxa-10-phosphaphenanthren-10-on oder -oxid (DOPO), das erstmals von Sanko Chemical Co. Ltd. in DE 20 34 887 beschrieben wurde, und verschiedene Derivate davon gute Flammschutzeigenschaften aufweisen, wobei diese Wirkung darauf zu beruhen scheint, dass diese Verbindungen beim Erhitzen phosphorhaltige Radikale freisetzen (siehe z. B. Schäfer et al., J. Appl. Polym. Sci. 105(2), 685-696 (2007)). Seither war die Flammschutzwirkung von DOPO und dessen Derivaten Gegenstand zahlreicher Publikationen. Auch die Erfinder des vorliegenden Anmeldungsgegenstands haben einige neue Derivate von DOPO hergestellt und deren mitunter ausgezeichnete Wirkung als Flammschutzmittel, etwa zur Flammschutzausrüstung von Kunststoffen wie Polystyrol und Epoxyharzen, bestätigt. Siehe z.B. AT 508.468 A1, AT 509.659 A1, WO 2011/000019 A1 und AT A 548/2011. Darunter finden sich auch 9,10-Dihydro-9-oxa-10-phosphaphenanthren-10-thion bzw. -10-sulfid (DOPS) und eine Reihe von Derivaten dieser Verbindung.

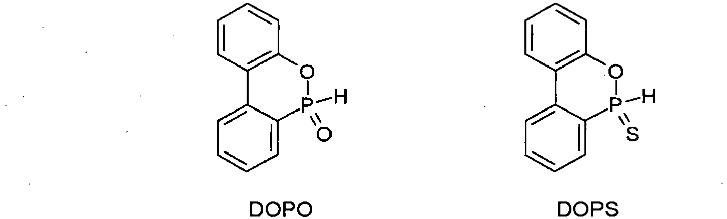

In der Literatur werden auch einige Versuche beschrieben, DOPO kovalent an Polymere von Kunstharzen an- oder in diese einzubinden. Für Epoxyharze ist dies in am besten in zwei Überblicksartikeln von S. Levchik et al. nachzulesen (Polym. Int. 53, 1901-1929 (2004); Polym. Degrad. Stab. 88, 57-62 (2005)). Beispielsweise wurde DOPO an Bisphenol A-Diglycidylether (DGEBA) addiert: 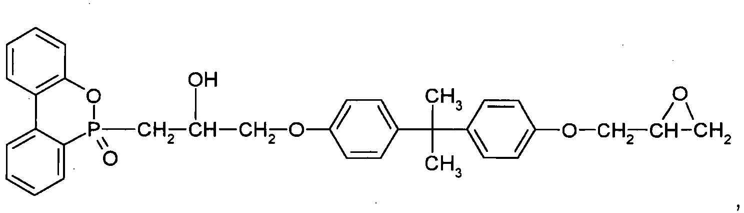 und bei anschließender Polymerisation dieses Monomers in ein Epoxyharz eingebunden, oder auch an Kresol-Formaldehyd-Novolak-Glycidylether addiert, was beispielsweise einen Kresol-Novolak mit Monomereinheiten der folgenden Struktur (mit einem durchschnittlichen Substitutionsgrad DS von 12) ergab:

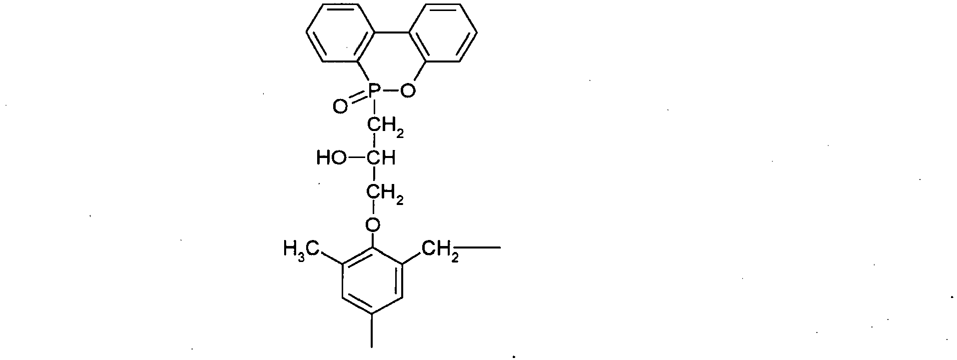

Weiters wurde DOPO an den aromatischen Ring verschiedener Dihydroxyaromaten gebunden, wie etwa von Dihydroxybenzolen, z.B. Hydrochinon, was folgende Struktur ergibt: 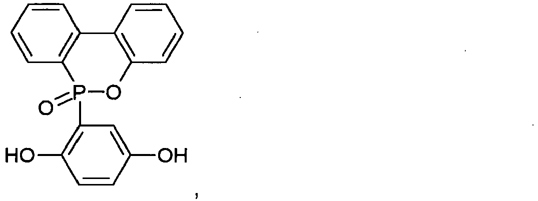 oder von Dihydroxynaphthalinen sowie von - mitunter oligomeren - Diglycidylethern solcher Diole, oder auch an die Doppelbindung ungesättigter Dicarbonsäuren, wie z.B. von Malein- und Itaconsäure, addiert: 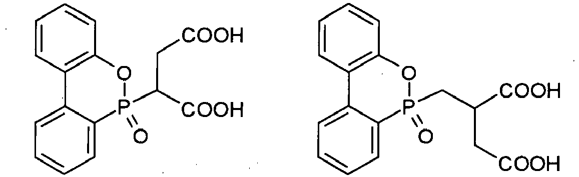 oder selbst epoxymodifiziert: 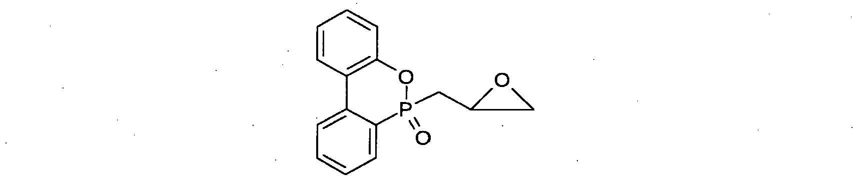 und in Form eines solchen reaktiven Monomers in Epoxyharze einpolymerisiert.

Auch gemäß US 2005/101793 A1 werden Polyhydroxyaromaten (z.B. Hydrochinon, Resorcin, Brenzcatechin, Phloroglucin, Bisphenol A) mit DOPO-Resten modifiziert, in dem die OH-Gruppen mit einem Überschuss an DOPO-CI oder DOP-CI umgesetzt werden. In zweiterem Fall folgt eine Oxidation der an den jeweiligen Aromaten gebundenen DOP-Reste mit Ozon zu den DOPO-Resten.

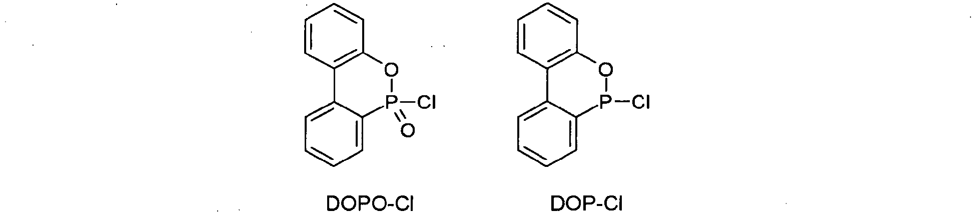

Darüber hinaus ist die Reaktion von DOPO mit Carbonylgruppen bekannt, so auch jene mit der Ketogruppe von Dihydroxybenzophenon und die anschließende Polymerisation dieses Monomers zu Epoxyharzen (siehe Y. Liu, J. Appl. Polym. Sci. 83(8), 1697-1701 (2002)).

In WO 2010/114279 A2 wird die Reaktion von DOPO mit der Carbonylgruppe von 4-Hydroxybenzaldehyd und die anschließende Polykondensation des Produkts mit Formaldehyd zu entsprechenden Novolaken beschrieben:

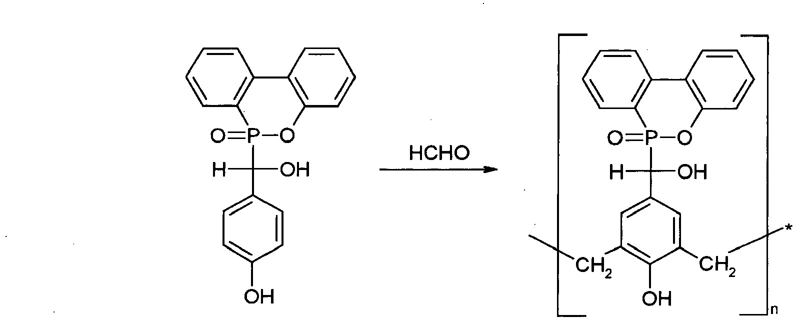

In ähnlicher Weise funktioniert gemäß Liu et al. (J. Polym. Sci. Polym. Chem. Ed. 40, 2329 (2002)) die Reaktion von 2 Molekülen DOPO mit Terephthalaldehyd und anschließende Polykondensation zu Phenolharzen des folgenden Typs:

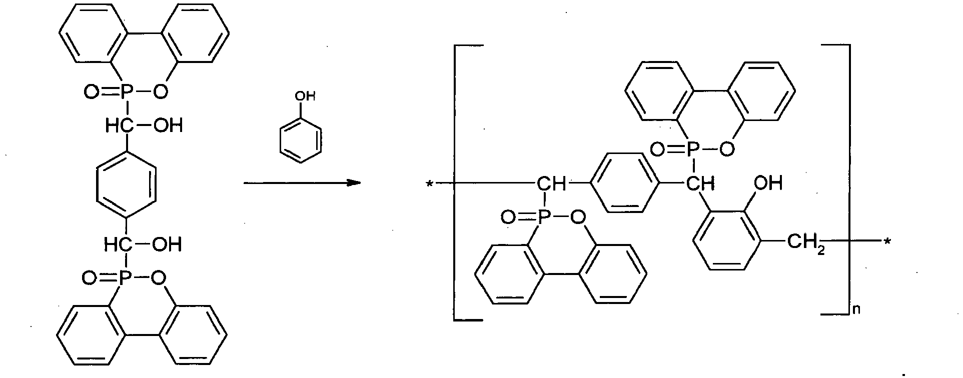

Aufgrund ihrer freien phenolischen OH-Gruppen sind derartige Phenolharze als Härter für Epoxyharze einsetzbar.

Auch die direkte Anbindung von DOPO an eine phenolische OH-Gruppe eines Novolaks ist bekannt: J.-Y. Shieh und C.-S. Wang beschreiben in J. Appl. Polym. Sci. 78, 1636-1644 (2000), die Reaktion eines Phenol-Novolaks aus 6 Phenoleinheiten (d.h. n = 5) mit DOPO-CI zum monosubstituierten Novolak-Produkt:

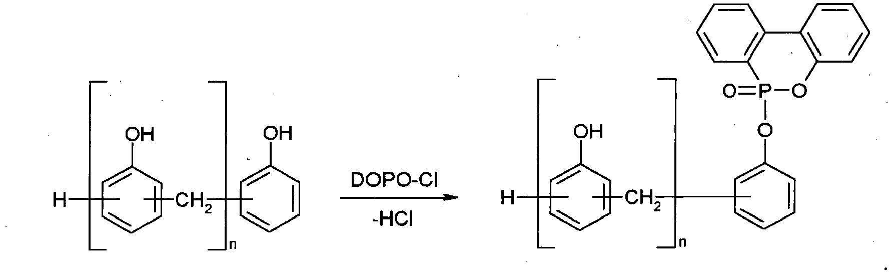

Dieser Novolak wurde wiederum als Härter für Epoxyharze eingesetzt.

Die Nachteile von DOPO-Derivaten nach dem Stand der Technik liegen einerseits in mitunter unzureichenden Temperatureigenschaften (Zersetzungspunkt, Erweichungspunkt, Glastemperatur, Schmelzbereich), worauf unter anderem auch Levchik et al. in ihren Überblicksartikeln hinweisen, und andererseits in mangelnder Kompatibilität mit anderen Komponenten von Harzmischungen (Polymeren, Additiven) und teilweise auch in unzureichender Flammhemmung. Letztere ist zumeist auf die Gegenwart von leicht(er) entflammbaren Kohlenwasserstoffresten im Molekül zurückzuführen.

Ziel der Erfindung war daher die Entwicklung neuer, flammhemmend ausgerüsteter Novolake, mit denen die obigen Nachteile zumindest teilweise behoben werden können.

### OFFENBARUNG DER ERFINDUNG

Dieses Ziel erreicht die vorliegende Erfindung in einem ersten Aspekt durch Bereitstellung von Novolaken, die mit 9,10-Dihydro-9-oxa-10-phosphaphenanthren (DOP) und/oder einem Derivat davon flammhemmend modifiziert sind und der nachstehenden Formel (I) entsprechen: 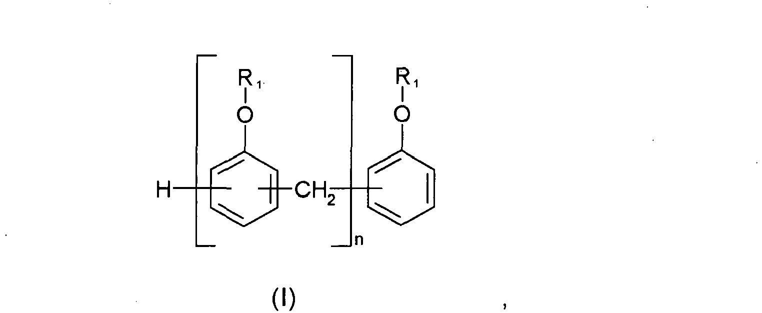 worin
die R₁ aus i) Wasserstoff,
ii) einem DOP-Rest der Formel 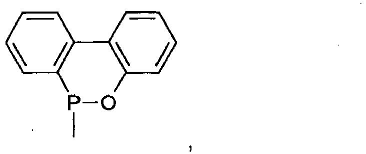
iii) einem DOPO-Rest der Formel 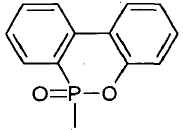 und
iv) einem DOPS-Rest der Formel 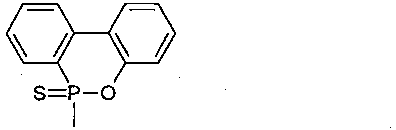 ausgewählt sind; und
n ≥ 2 ist;
wobei eine Vielzahl der Reste R₁ DOP-, DOPO- und/oder DOPS-Reste sind, die nachstehend gelegentlich kollektiv als DOP(O,S)-Reste bezeichnet werden.

Derartige, bisher unbekannte Novolake mit einer Vielzahl von flammhemmend wirkenden 9,10-Dihydro-9-oxa-10-phosphaphenanthren-Gruppierungen weisen ausgezeichnete Flammhemmung auf, wie die späteren Ausführungsbeispielen klar belegen. In Abhängigkeit von der Kettenlänge, die anhand des Index n oder des durchschnittlichen Polymerisationsgrads DP, der n+1 entspricht, angegeben werden kann, und von der Anzahl an nicht modifizierten phenolischen OH-Gruppen darin sind die erfindungsgemäßen Novolake sowohl selbst als flammfeste Phenol-Novolake als auch als Reaktionskomponente für Polykondensation- und -additionsreaktionen einsetzbar. In beiden Fällen können die neuen Novolake daher als Flammschutzadditive für eine Reihe von Kunststoffen dienen.

Bei den erwähnten Polykondensation- und -additionsreaktionen können die flammhemmenden Novolake der Erfindung als reaktives Oligomer oder Polymer in ein Polymernetzwerk eingebaut werden, das entweder vom gleichen Typ, d.h. ebenfalls ein Phenolharz wie etwa ein Novolak oder ein Resol, oder auch völlig unterschiedlich sein kann, z.B. ein Epoxidharz, ein Polyester, ein Polyurethan usw. Zu diesem Zweck weisen die erfindungsgemäßen Novolake gemäß manchen bevorzugten Ausführungsformen zumindest eine, noch bevorzugter zumindest zwei, freie OH-Gruppe(n) auf, um als Reaktionspartner, z.B. als Härter oder Vernetzer in solchen Polymerisationen dienen zu können.

Allerdings sind auch Ausführungsformen der Novolake ohne freie OH-Gruppen mit Phenol und Formaldehyd zu neuen Phenolharzen kondensierbar. Demgemäß sind in erfindungsgemäßen Novolaken vorzugsweise im Wesentlichen alle Reste R₁ DOP-, DOPO- und/oder DOPS-Reste, d.h. es sind wenige oder gar keine freien phenolischen OH-Gruppen im Molekül vorhanden. Alternativ oder zusätzlich dazu sind im Wesentlichen alle Reste R₁, die nicht Wasserstoff sind, DOPO- oder DOPS-Reste, d.h. es existieren wenige oder gar keine DOP-Reste im Molekül, da zwar die Flammschutzwirkung von DOPS- und DOPO-Gruppierungen ähnlich jener der nichtoxidierten DOP-Reste ist, andererseits aber DOP-Reste bei manchen Verwendungen der erfindungsgemäßen Novolake unerwünschte Oxidations- oder Additionsreaktionen eingehen könnten, da sie geringere chemische Stabilität aufweisen. So neigen DOP-Reste beispielsweise eher zur Hydrolyse als die oxidierten Formen und sind auch thermisch instabiler, d.h. ihre Zersetzungstemperatur liegt deutlich unter jener der oxidierten DOPO- und DOPS-Reste.

Insbesondere sind daher im Wesentlichen alle Reste R₁ DOPO- oder DOPS-Reste, d.h. es sind pro Molekül wenige bis gar keine freien OH-Gruppen oder DOP-Reste enthalten. Derartige Ausführungsformen der erfindungsgemäßen Novolake weisen neben den bei Hitzeeinwirkung flammhemmenden DOPO- und/oder DOPS-Resten somit keinerlei reaktive Gruppen auf und sind daher beispielsweise als chemisch im Wesentlichen unreaktive Additive für zahlreiche Arten von Harzmischungen geeignet und, wie bereits erwähnt, auch thermisch stabiler, d.h. sie halten höheren Temperaturen stand, was für Flammschutzmittel natürlich ein entscheidendes Merkmal darstellt.

Unter "wenige bis gar keine" in Bezug auf freie OH-Gruppen oder DOP-Reste ist in besonders bevorzugten Ausführungsformen zu verstehen, dass pro Molekül nur eine oder eben gar keine freie OH-Gruppe bzw. nur ein oder gar kein nichtoxidierter DOP-Rest vorhanden ist. Wie hoch der jeweilige Anteil einer einzigen OH- oder DOP-Gruppe ist, hängt dabei natürlich von der durchschnittlichen Kettenlänge des Novolaks, genauer gesagt von der mittleren Anzahl an Phenol-Einheiten ab. Wie dies für den Fachmann leicht nachvollziehbar ist, würde bei oligomeren Novolaken mit einer einstelligen mittleren Anzahl an Phenol-Einheiten, d.h. einem DP < 10, sprich n < 9, eine einzige freie OH-Gruppe im Molekül einen Substitutionsgrad mit DOP(O,S)-Resten von (mehr oder weniger weit) unter 90 % bedeuten, während bei höhermolekularen Novolaken mit einem DP > 90 die Existenz nur einer einzigen freien OH-Gruppe bedeutet, dass mehr als 90 % der phenolischen OH-Gruppen mit DOP(O,S)-Resten modifiziert sind.

Dem Fachmann ist klar, dass Novolake eine von den Herstellungsbedingungen abhängige Molekulargewichtsverteilung aufweisen, so dass jegliche Angaben bezüglich der Kettenlänge und der Anzahl an phenolischen OH-Gruppen lediglich Durchschnittswerte sind, von denen die tatsächlichen Werte mehr oder weniger stark abweichen können. Dies ist speziell bei relativ kurzkettigen Novolaken zu beachten, da hier die prozentuelle Änderung des Substitutionsgrads bei Schwankungen der Kettenlänge besonders stark ausfällt, d.h. selbst wenn die Kette nur um eine einzige Phenoleinheit vom Mittel abweicht. Für die Zwecke hierin wurde bei Berechnungen in der Regel von der zahlenmittleren Molmasse (Mₙ) ausgegangen, die durch gelpermeatiönschromatographische Bestimmung (GPC) erhalten wurde, wie dies später noch näher ausgeführt wird.

In bevorzugten Ausführungsformen des Novolaks der vorliegenden Erfindung beträgt der Substitutionsgrad mit DOP(O,S)-Resten im Mittel über 90 %, noch bevorzugter über 95 %, insbesondere über 99 %. Da in bevorzugten Novolaken der Erfindung gemäß Formel (I) n vorzugsweise für 4 bis 100, noch bevorzugter 5 bis 50, insbesondere 6 bis 30, steht, um für eine ausreichende Kettenlänge, um selbst als flammgeschütztes Novolakharz einsetzbar zu sein, und gleichzeitig für Kompatibilität mit anderen Kunststoffen und Harzen zu sorgen, weist die Mehrzahl solcher bevorzugter Novolak-Moleküle keine einzige freie OH-Gruppe auf.

Wird ein solcher erfindungsgemäß bevorzugter Novolak mit einem Substitutionsgrad von über 90 %, über 95 % oder über 99 % bei der Herstellung anderer Polymere, wie z.B. von Epoxiden, Polyestern oder Polyurethanen, zugesetzt, können jene Novolak-Moleküle, die über eine oder mehrere freie OH-Gruppen verfügen, in das wachsende Polymer kovalent miteingebaut werden, während der Rest der Novolak-Moleküle als Flammschutzadditiv im so hergestellten Kunstharz enthalten ist.

Obwohl die DOP-, DOPO- bzw. DOPS-Reste gemäß vorliegender Erfindung vorzugsweise keine Substituenten aufweisen, können sie dennoch in manchen Fällen an einem oder beiden ihrer aromatischen Ringe mit einem oder mehreren Substituenten substituiert sein, die aus der aus Halogenen, C₁₋₄-Alkyl, C₁₋₄-Alkoxy, C₁₋₄-Alkylcarbonyl, C₁₋₆-Aryl, C₁₋₄-Alkyl-C₁₋₆-aryl, C₁₋₆-Aryl-C₁₋₄-alkyl, Formyl, Amino, Ammonio, C₁₋₄-Alkylamino, Di-C₁₋₄-alkylamino, Carboxyl, Carbamoyl, Sulfo und Phosphono bestehenden Gruppe ausgewählt sind. Besonders bevorzugt sind in solchen Fällen jene Substituenten, die die flammhemmende Wirkung unterstützen können, wie z.B. Amino, Ammonio, Carboxyl, Carbamoyl, Sulfo oder Phosphono. Da gegenwärtig zunehmend halogenfreie Kunststoffe gewünscht werden, sind Halogene als Substituenten in der Regel nicht bevorzugt.

Dasselbe gilt analog für die aromatischen Ringe des mit den flammhemmenden Resten modifizierten Ausgangs-Novolaks. In diesem Fall sind als Phenyl-Substituenten neben den oben genannten auch C₁₋₄-Alkyl und C₁₋₆-Aryl-C₁₋₄-alkyl bevorzugt, um auch Bisphenol-Novolake, d.h. Novolake, die aus der Polykondensation von Formaldehyd mit Verbindungen der Bisphenol-Reihe, wie sie beispielsweise in der Literatur als Bisphenole A bis Z angeführt sind, erhalten werden, als Ausgangsprodukte für die Herstellung der erfindungsgemäßen Novolake zu inkludieren. Auf Biphenolen und Bisphenolen basierende Novolake sind nämlich grundsätzlich auf analoge Art und Weise herstellbar und weisen auch vergleichbare Reaktivitäten auf wie die in den nachfolgenden Beispielen hergestellten Phenol-Novolake.

In einem zweiten Aspekt betrifft die Erfindung ein Verfahren zur Herstellung von flammhemmend modifizierten Novolaken gemäß dem ersten Aspekt durch Umsetzung eines Ausgangs-Novolaks mit 10-Chlor-9,10-dihydro-9-oxa-10-phosphaphenanthren (DOP-CI) in einem Molverhältnis zwischen DOP-CI und den Molekülen des Ausgangs-Novolaks von zumindest 2:1, um einen DOP-modifizierten Novolak der Erfindung zu erhalten, der pro Molekül zumindest zwei DOP-Reste enthält.

Da besonders bevorzugte Novolake der vorliegenden Erfindung, wie oben erläutert, im Wesentlichen keine freien phenolischen OH-Gruppen aufweisen, wird der Ausgangs-Novolak vorzugsweise mit einer molaren Menge an DOP-CI umgesetzt, die der Menge an OH-Gruppen des Novolaks im Wesentlichen entspricht. Zwar kann auch ein Überschuss an DOP-CI, bezogen auf die OH-Gruppen des Ausgangs-Novolaks, eingesetzt werden, allerdings würde dies den Aufwand für die Reinigung des gewünschten Produkts erhöhen. Die molare Menge an DOP-CI liegt daher vorzugsweise um nicht mehr als 2 Mol-% unter der Menge an OH-Gruppen des Ausgangs-Novolaks, und besonders bevorzugt werden äquimolare Mengen eingesetzt. Je nach der Kettenlänge werden auf diese Weise erfindungsgemäße Novolake erhalten, die pro Molekül in Mittel gar keine oder nur eine freie OH-Gruppe aufweisen.

Vorzugsweise wird das Verfahren der vorliegenden Erfindung in Gegenwart eines Säurefängers durchgeführt, um das Reaktionsgleichgewicht zur Produktseite hin zu verschieben. Der Säurefänger ist vorzugsweise 1-Methylimidazol, obwohl sich durchaus auch andere dem Fachmann bekannte Verbindungen eignen wie etwa Ammoniak, Alkyl- und Arylamine und andere Stickstoffverbindungen, wie z.B. Triethylamin, Pyridin, Imidazol und dergleichen, oder andere Basen, wie z.B. Alkali- und Erdalkalimetallverbindungen. 1-Methylimidazol besitzt den großen Vorteil, dass sein Hydrochlorid bereits bei 75 °C schmilzt (während z.B. das nichtmethylierte homologe Imidazoliumchlorid einen Schmelzpunkt von 158-161 °C aufweist) und daher bei geeigneter Wahl des Lösungsmittels und der Reaktionstemperatur eine zweite flüssige Phase neben der Reaktionslösung bildet, die leicht abzutrennen ist.

Das Lösungsmittel ist nicht speziell eingeschränkt, solange es gegenüber den darin ablaufenden Reaktionen chemisch inert ist und die Ausgangsprodukte darin löslich oder zumindest dispergierbar sind. Es sollte jedoch aus obigen Gründen einen deutlich über 75 °C liegenden Siedepunkt aufweisen, ausreichend gutes Lösungsvermögen für DOP-CI aufweisen und 1-Methylimidazoliumchlorid nicht lösen. Gemäß vorliegender Erfindung wird daher vorzugsweise ein relativ apolares, wasserfreies Lösungsmittel, noch bevorzugter ein aromatischer Kohlenwasserstoff, wie z.B. Benzol, Toluol, Xylol usw., insbesondere Toluol eingesetzt. Vorzugsweise wird dasselbe Lösungsmittel sowohl für die Modifizierung des Ausgangs-Novolaks als auch für die anschließende Oxidation eingesetzt. Es können jedoch auch unterschiedliche Lösungsmittel zum Einsatz kommen, beispielsweise Toluol für die Modifizierung und Ethylacetat für die Oxidation usw.

Dieses Verfahren der Umsetzung mit DOP-CI ist ganz speziell auch für die Herstellung von bevorzugten Ausführungsformen der erfindungsgemäßen Novolake, die im Wesentlichen nur DOPO- und/oder DOPS-Reste als Reste R₁ aufweisen, bevorzugt. Zwar ist eine direkte Modifizierung der phenolischen OH-Gruppen eine Novolaks durch Umsetzung mit DOPO-CI und/ oder DOPS-CI - oder ähnlichen Derivaten mit anderen guten Abgangsgruppen als Chlor - prinzipiell auch möglich, allerdings haben die Erfinder im Zuge ihrer Forschungen festgestellt, dass bei einer solchen direkten Umsetzung der phenolischen OH-Gruppen mit DOPO- oder DOPS-CI Substitutionsgrade über 90 % nicht erzielbar sind und/oder kein reines Novolak-Produkt erhältlich ist.

Folglich wird vorzugsweise der nach dem obigen Verfahren erhaltene DOP-modifizierte Novolak mit einem Oxidationsmittel umgesetzt, um die DOP-Reste zu DOPO- oder DOPS-Resten zu oxidieren. Als Oxidationsmittel wird vorzugsweise ein Peroxid, um die DOP-Reste zu DOPO-Resten zu oxidieren, oder elementarer Schwefel oder eine Schwefelverbindung, um die DOP-Reste zu DOPS-Resten zu oxidieren, oder ein Gemisch davon eingesetzt. Als Peroxid kommen neben H₂O₂ zahlreiche andere Peroxide und Hydroperoxide und als Schwefelverbindungen beispielsweise P₂S₅ oder Lawessons Reagenz in Frage. Auch die literaturbekannte Oxidation von DOP zu DOPO mit Ozon ist möglich, lieferte aber in den Versuchen der Erfinder weniger gute Ergebnisse als Wasserstoffperoxid oder t-Butylhydroperoxid. Letzteres ist aufgrund seiner höheren Stabilität gegenüber H₂O₂ zu bevorzugen.

Das Oxidationsmittel wird dabei vorzugsweise in einer molaren Menge eingesetzt, die 90 bis 100 Mol-% der Menge an OH-Gruppen des Novolaks beträgt, insbesondere in einer äquimolaren Menge zur Menge an DOP-Resten im DOP-modifizierten Novolak. Die Menge hängt dabei auch vom Substitutionsgrad ab, der zuvor bei der Umsetzung mit DOP-CI erzielt wurde. Bei einem nahezu 100%igen Substitutionsgrad mit DOP-Resten durch Umsetzung von im Wesentlichen äquimolaren Mengen an OH-Gruppen im Ausgangs-Novolak und DOP-CI sollte auch die molare Menge an Oxidationsmittel im Wesentlichen jener der OH-Gruppen im Ausgangs-Novolak entsprechen. Wiederum ist jedoch im Zweifelsfall ein leichter Unterschuss gegenüber einem Überschuss zu bevorzugen, da so der Aufwand für die Entfernung eines Überschusses an Oxidationsmittel vermieden werden kann und ein geringer Anteil an DOP-Resten im fertigen Novolak der Erfindung in den meisten Fällen kaum störend ist, selbst wenn im Wesentlichen alle Reste R₁ DOPO- und/oder DOPS-Reste sein sollen.

In einem dritten Aspekt betrifft die Erfindung, wie oben erwähnt, die Verwendung der Novolake gemäß dem ersten Aspekt als Flammschutzmittel, wobei die Novolake, alleine oder als Gemische mehrerer davon, entweder als solche oder als Bestandteile einer Flammschutzzusammensetzung eingesetzt werden können. Vorzugsweise werden die Novolake dabei als Flammschutzmittel für natürliche und synthetische Polymere, noch bevorzugter für Kunststoffe, eingesetzt, da sie - speziell in den bevorzugten Kettenlängen - gute Verträglichkeit mit zahlreichen Kunstharzen aufweisen. Besonders bevorzugt werden die Novolake als Flammschutzmittel für Epoxidharze eingesetzt, wobei sie entweder einem fertigen Epoxid zugesetzt oder über freie phenolische OH-Gruppen bei der Herstellung des Epoxidharzes kovalent in dieses eingebunden werden können.

Die Novolake der Erfindung können weiters - ähnlich wie die von den Erfindern in früheren Arbeiten hergestellten DOPO- und DOPS-Derivate - zusammen mit einem oder mehreren weiteren Flammschutzmitteln und/oder Synergisten eingesetzt werden. Eine Kombination der neuen Novolake mit bestimmten Synergisten zeigt bessere Flammschutzwirkung als die jeweiligen Komponenten alleine. Für diese Zwecke kommen beispielsweise elementarer Schwefel, roter Phosphor, schwefel-, stickstoff- und/oder phosphorhältige Verbindungen, Metallhydroxide und Gemische davon in Frage. Beispiele dafür sind etwa Melamin und dessen Kondensationsprodukte, zu Homologen (z.B. Melam, Melem, Melon) und/oder mit mehrbasigen Säuren wie etwa Phosphorsäure, z.B. Melaminpolyphosphat; Bis(benzothiazolyl)disulfid (BBDS); Ester, Amide und Polykondensationsprodukte von Cyanursäure, Isocyanursäure und Guanamin oder Derivaten davon; Allantoin, Glycoluril, Dicyandiamid, Guanidin und Derivate davon. Darunter werden Melamincyanurat, Melaminpolyphosphat, Melaminpolyaluminium- und -zinkphosphate, wie sie z.B. unter der Marke Safire^{®} von Catena Additives erhältlich sind, BBDS, Aluminiumtrihydrat und Böhmit bevorzugt. Als zweites Flammschutzmittel eignen sich weiters auch Vertreter der Exolit^{®}-Reihe, d.h. Phosphinsäure- und Disphosphinsäure-Metallsalze, wie sie z.B. in WO 97/039053 A1 und EP 1.024.167 A1 offenbart werden.

Solange die Wirkungsweise der Erfindung nicht beeinträchtigt wird, können erfindungsgemäße Novolake enthaltende Flammschutzzusammensetzungen auch beliebige weitere Bestandteile umfassen, um bestimmte Eigenschaften der jeweiligen Zusammensetzung zu verbessern.

### BEISPIELE

Nachstehend wird die vorliegende Erfindung anhand von nichteinschränkenden Ausführungsbeispielen näher beschrieben.

Die Ausgangs-Novolake sind im Handel unter dem Markennamen Prefere^{®} von der Dynea Erkner GmbH erhältlich und wurden (abgesehen von einer Vakuum-Entwässerung) ebenso unverändert in den nachstehend beschriebenen Reaktionen eingesetzt wie alle übrigen, ebenfalls im Handel frei erhältlichen Reagenzien. Die jeweiligen Werte für n bzw. den DP wurden aus den bei GPC-Analysen erhaltenen zahlenmittleren Molmassen (Mₙ) und der mittleren Molmasse einer Phenol-Formaldehyd-Novolak-Grundeinheit -Ph(OH)-CH₂- (rund 106 g/mol) berechnet und gerundet.

Es sei erneut darauf hingewiesen, dass diese zahlenmittleren Molmassen und folglich auch die Werte für n und DP theoretische Werte sind. Die tatsächlichen Kettenlängen der Novolake können besonders bei relativ kurzkettigen Oligo- oder Polymeren, wie sie in den Beispielen verwendet wurden, mitunter recht stark vom berechneten DP abweichen. Dies geht beispielsweise aus dem Polymolekularitätsindex bzw. der Polydispersität D hervor, der/die dem Verhältnis zwischen der gewichtsmittleren Molmasse M_{w} und der zahlenmittleren Molmasse Mₙ entspricht: D = M_{w}/Mₙ. Je weiter der Wert für D von 1 abweicht, desto stärker streut die Kettenlänge. Daher sind in den Beispielen neben den Werten für n und DP auch jene für D angegeben, die ebenfalls aus den jeweiligen GPC-Analysen erhalten und gerundet wurden, zum Teil aber auch vom Hersteller angegeben waren. So bedeutet etwa die Produktbezeichnung Prefere^{®} 4439X DP106, dass der Wert für den DP 10,6 beträgt. Zur Bestimmung der Thermostabilitäten der in den Beispielen aufgeführten DOP-, DOPO- und DOPS-funktionalisierten Novolake wurden thermogravimetrische Untersuchungen (TGA) durchgeführt. Als Zersetzungstemperatur wurde diejenige Temperatur festgelegt, bei der ein Masseverlust von 1 % festgestellt wurde.

### Beispiel 1

### Modifizierung eines handelsüblichen Novolaks zum DOP-modifizierten Novolak (1)

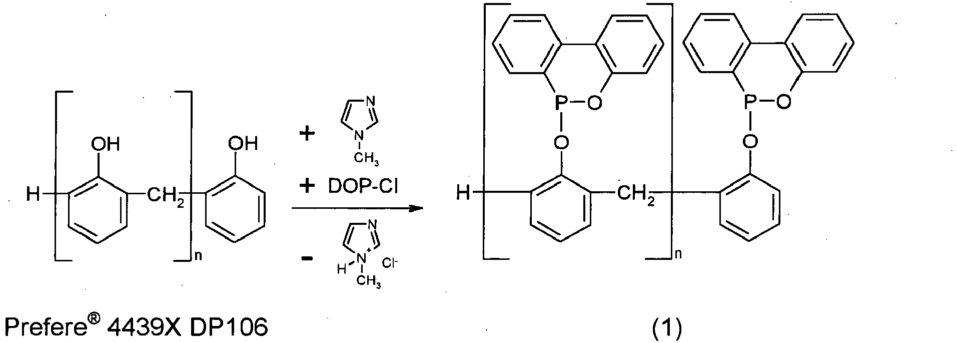

In einen mit Innenthermometer, Tropftrichter, Rührer und Inertgasüberleitung ausgerüsteten 500-ml-Dreihalsrundkolben wurden 31,5 g eines Phenol-Novolaks der Marke Prefere^{®} 4439X DP106 (DP = 11, n = 10; D = 1,76) - entsprechend 0,3 mol an freien OH-Gruppen - gefüllt. Dieser Ausgangs-Novolak wurde im Vakuum unter Rühren 1 h lang auf 165 °C erhitzt, um Spuren von Wasser und freiem Phenol zu entfernen. Dann wurde die Temperatur auf 115 °C gesenkt und die Reaktionsapparatur mit Argon gefüllt. Anschließend wurden 25 g (0,3 mol) wasserfreies 1-Methylimidazol als Säurefänger zugesetzt. Nach dem Vermischen der beiden Substanzen wurden 50 ml abs. Toluol zugesetzt. Als der zweiphasige Kolbeninhalt rührbar war, wurde die Temperatur auf 85 °C verringert, wonach eine Lösung von 70,5 g (0,3 mol) DOP-CI in 100 ml abs. Toluol im Verlauf von 90 min unter heftigem Rühren zugetropft wurde, wobei die Temperatur bei 80 °C gehalten wurde. Der weiterhin zweiphasige Kolbeninhalt wurde noch 1 h lang bei dieser Temperatur gerührt, und dann wurden Heizung und Rührer abgestellt. Beim Abkühlen erstarrte die untere Phase aus 1-Methylimidazol-hydrochlorid zu einem festen Bodenkörper.

Die überstehende Lösung wurde zum Teil unverändert in nachfolgenden Reaktionen eingesetzt oder aber im Vakuum eingedampft, wobei allmählich auf 170 °C erhitzt wurde. Die so erhaltene Schmelze wurde in eine Stahlwanne gegossen. Der nach deren Erstarren erhaltene gelbliche Feststoff wurde mit einem Mörser zu einem Pulver zerkleinert.

¹H-NMR-Analyse dieses Novolaks der Erfindung ergab, dass > 99 % der OH-Gruppen DOP-funktionalisiert waren (d.h. das Signal der OH-Gruppe war vollständig verschwunden). Das bedeutet, dass im Mittel nur jedes zehnte Molekül von Novolak (1) oder weniger eine freie OH-Gruppe aufweist. Im ³¹P-NMR war ausschließlich das Signal des DOP-funktionalisierten Novolaks (1) zu finden. Nichtumgesetztes DOP-CI war nicht mehr nachweisbar. Die beiden Peaks im ³¹P-NMR resultieren offenbar aus geringen Anteilen an para- statt ortho-verknüpften Phenoleinheiten im Ausgangs-Novolak.
¹H-NMR (CDCl₃) δ: 2,95-3,9 ppm (2H, CH₂); 6,2-8,1 ppm (11 H, Ar-H).
³¹P-NMR (CDCl₃) δ: 127-128 ppm; 132-134 ppm.
Zersetzungstemperatur: 250 °C

### Beispiel 2

### Oxidation von (1) zum DOPO-modifizierten Novolak (2) mit TBHP

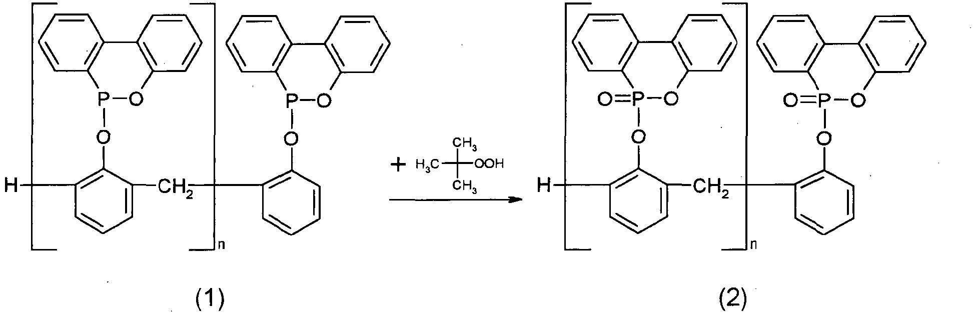

Eine gemäß Beispiel 1 erhaltene Lösung des DOP-modifizierten Novolaks (1) wurde unter Inertgas in einen mit Innenthermometer, Tropftrichter, Inertgasüberleitung, Rückflusskühler und Rührer ausgerüsteten 500-ml-Dreihalskolben übergeführt und auf 35 °C erwärmt. Dann wurden im Verlauf von 45 min 74,5 g (0,3 mol) einer 40%-igen Lösung von tert-Butylhydroperoxid (TBHP) in Toluol unter heftigem Rühren zugetropft. Während der exothermen Reaktion wurde der Temperaturanstieg durch moderate Außenkühlung des Reaktionskolbens auf 50-60 °C begrenzt. Die zunächst homogene Reaktionslösung wurde während der Umsetzung aufgrund der Ausbildung zweier Phasen milchig trüb. Nach dem Ende der Zugabe wurde die Temperatur noch 30 min lang bei 55-60 °C gehalten. Danach wurden die Heizung und der Rührer abgeschaltet. Nach dem Abkühlen wurde die obere Phase abgetrennt und verworfen. Die zähflüssige untere Phase wurde im Vakuum allmählich auf 235 °C erhitzt, wobei die Aufheizrate so gewählt wurde, dass starkes Schäumen vermieden wurde. Anschließend wurde die heiße, viskose Schmelze abgekühlt und bei 50 °C in 300 ml Chloroform gelöst. Diese Lösung wurde in 1,5 I an ebenfalls auf 50 °C erwärmtem Ethanol gegossen, um das Produkt auszufällen. Nach dem Abkühlen wurde der Überstand abdekantiert und der zähe Bodenkörper in einen Rundkolben übergeführt, in dem er im Vakuum allmählich auf 235 °C erhitzt wurde. Diese Schmelze wurde anschließend in eine Stahlwanne gegossen, wo sie zu einem spröden, glasartigen Feststoff erstarrte, der nach dem Abkühlen mit einem Mörser zerkleinert wurde, wobei ein gelbliches Pulver (85 g) erhalten wurde.

Das ³¹P-NMR-Spektrum des Produkts zeigte, dass der erfindungsgemäße Novolak (2) mit einer Reinheit von 98 % erhalten wurde.
¹H-NMR (CDCl₃) δ: 3,2-3,9 ppm (2H, CH₂); 6,3-8,0 ppm (11 H, Ar-H).
³¹P-NMR (CDCl₃) ö: 6,7-7,3 ppm.
T_{g} = 109°C
Zersetzungstemperatur: 310 °C

### Beispiel 3

### Oxidation von (1) zum DOPO-modifizierten Novolak (3) mit H₂O₂

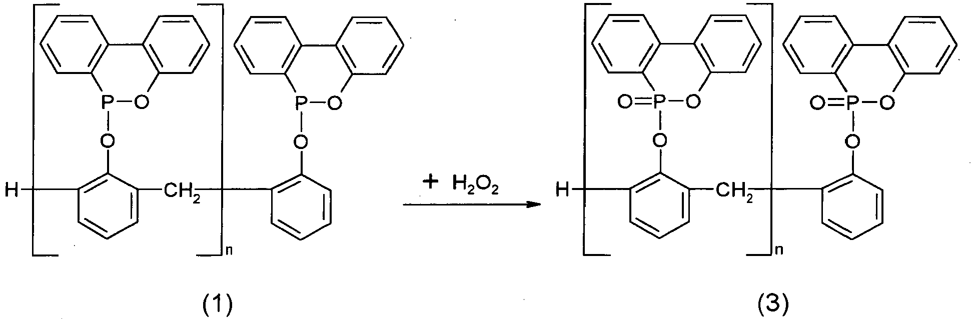

Von dem gemäß Beispiel 1 erhaltenen, festen, DOP-modifizierten Novolak (1) wurden 33,5 g unter Inertgas in einen mit Innenthermometer, Tropftrichter, Inertgasüberleitung, Rückflusskühler und Rührer ausgerüsteten 500-ml-Dreihalskolben eingewogen, und es wurden 100 ml Ethylacetat zugesetzt. Dann Wurden 37 g einer 11%igen Lösung von Wasserstoffperoxid in Ethylacetat im Verlauf von 30 min unter heftigem Rühren zugetropft, wobei die Temperatur des Reaktionsgemischs mittels eines Kühlbades bei etwa 20 °C gehalten wurde. Während der Umsetzung schied sich eine viskose Substanz ab. Nach dem Ende der Zugabe wurde noch 30 min lang ohne Kühlbad gerührt und schließlich etwa 15 min lang auf etwa 70 °C erhitzt. Anschließend wurde der weiterhin inhomogene Kolbeninhalt auf ca. 45 °C abgekühlt, wonach die flüchtigen Komponenten abdestilliert wurden. Dabei wurde die Temperatur allmählich auf 170 °C erhöht und der Druck auf 2 mbar gesenkt. Daraufhin wurde die zähe Schmelze aus dem Kolben in eine Stahlwanne ausgegossen, wo sie zu einem gelblichen Feststoff (35 g) erstarrte, der wiederum zu einem Pulver zerkleinert wurde.

Das ³¹P-NMR-Spektrum dieses Produkts zeigte, dass der erfindungsgemäße Novolak (3) mit einer Reinheit von 97 % erhalten wurde.
¹H-NMR (CDCl₃) δ: 3,2-3,9 ppm (2H, CH₂); 6,3-8,0 ppm (11 H, Ar-H).
³¹P-NMR (CDCl₃) δ: 6,7-7,3 ppm.
T_{g} = 110°C
Zersetzungstemperatur: 315 °C

### Beispiel 4

### Oxidation von (1) zum DOPS-modifizierten Novolak (4) mit elementarem Schwefel

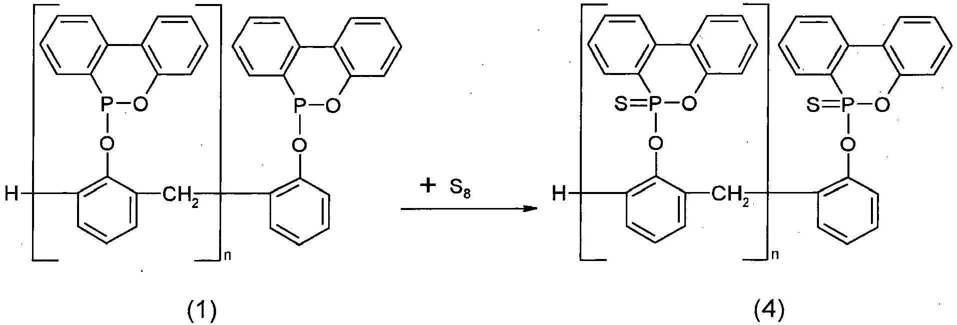

Eine gemäß Beispiel 1 erhaltene Lösung des DOP-modifizierten Novolaks (1) wurde zusammen mit 9,5 g (0,3 mol) elementarem Schwefel unter Rückfluss und Inertgasatmosphäre 5 h lang gerührt. Nach dem Abkühlen wurde die obere Phase des nun zweiphasigen Systems abgetrennt. Die untere Phase wurde im Vakuum allmählich auf 220 °C erhitzt. Dabei wurde die Aufheizrate so gewählt, dass starkes Schäumen vermieden wurde. Anschließend wurde die heiße viskose Schmelze in eine Stahlwanne gegossen, wo sie zu einem spröden, glasartigen Feststoff erstarrte. Dieser wurde nach dem Abkühlen mit einem Mörser zu einem gelblichen Pulver (68 g) zerkleinert.

Das ³¹P-NMR-Spektrum dieses Produkts zeigte, dass der erfindungsgemäße Novolak (4) mit einer Reinheit von ca. 97% erhalten wurde.
¹H-NMR (CDCl₃) ö: 3,1-3,9 ppm (2H, CH₂); 6,3-8,2 ppm (11H, Ar-H).
³¹P-NMR (CDCl₃) δ: 72,1 ppm; 73,0 ppm.
Zersetzungstemperatur: 310 °C

### Beispiel 5

### Modifizierung eines handelsüblichen Novolaks zum DOP-modifizierten Novolak (5)

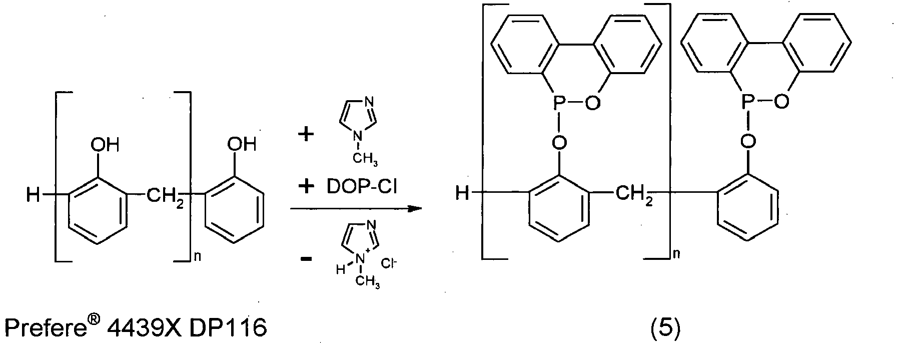

In einen mit Innenthermometer, Tropftrichter, Rührer und Inertgasüberleitung ausgerüsteten 1-I-Dreihalsrundkolben wurden 53 g eines Phenol-Novolaks der Marke Prefere^{®} 4439X DP116 (DP = 12, n = 11; D = 1,90) - entsprechend 0,5 mol an freien OH-Gruppen - gefüllt. Dieser Ausgangs-Novolak wurde unter Vakuum und Rühren 1 h lang auf 145 °C erhitzt, um Spuren von Wasser und freiem Phenol zu entfernen. Dann wurde die Temperatur auf 130 °C gesenkt und die Reaktionsapparatur mit Argon gefüllt. Anschließend wurden 41 g (0,5 mol) wasserfreies 1-Methylimidazol als Säurefänger zugesetzt. Nach dem Vermischen der beiden Substanzen wurde der Kolbeninhalt rührbar, wonach auf 85 °C abgekühlt wurde und 75 ml abs. Toluol unter Rühren langsam zugesetzt wurden, um eine weitere Abkühlung zu vermeiden. Danach wurde eine Lösung von 117,5 g (0,5 mol) DOP-CI in 200 ml abs. Toluol im Verlauf von 30 min unter heftigem Rühren zugetropft, wobei die Temperatur bei 80-85 °C gehalten wurde. Der weiterhin zweiphasige Kolbeninhalt wurde noch 75 min lang bei dieser Temperatur gerührt, und dann wurden Heizung und Rührer abgestellt. Beim Abkühlen erstarrte die untere Phase aus 1-Methylimidazol-hydrochlorid zu einem festen Bodenkörper. Die überstehende Lösung wurde als solche in der nachfolgenden Reaktion eingesetzt.

¹H-NMR-Analyse dieses Novolaks der Erfindung ergab, dass etwa 99 % der OH-Gruppen DOP-funktionalisiert waren, während im ³¹P-NMR kein nichtumgesetztes DOP-CI mehr nachweisbar war. Das bedeutet, dass im Mittel jedes neunte Molekül des Novolaks (5) eine freie OH-Gruppe aufwies.
³¹P-NMR (CDCl₃) δ: 127-128 ppm; 132-134 ppm.

### Beispiel 6

### Oxidation von (5) zum DOPO-modifizierten Novolak (6) mit TBHP

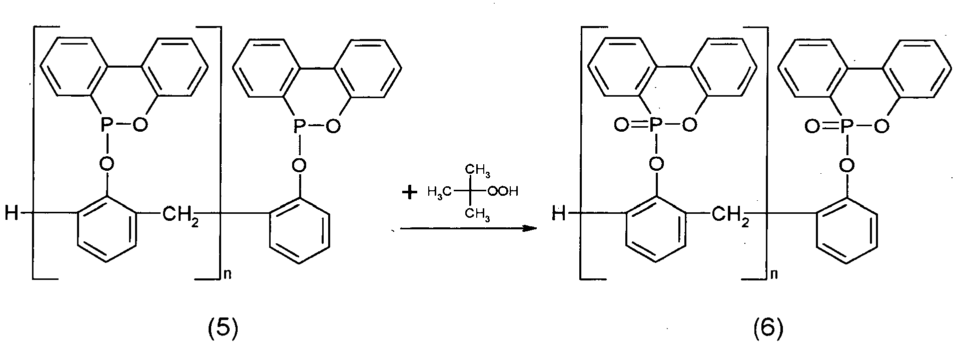

Die in Beispiel 5 erhaltene Lösung des DOP-modifizierten Novolaks (5) wurde unter Inertgas in einen mit Innenthermometer, Tropftrichter, Inertgasüberleitung, Rückflusskühler und Rührer ausgerüsteten 1-I-Dreihalskolben übergeführt. Dann wurden im Verlauf von 35 min 112,5 g (0,5 mol) einer 40%igen Lösung von tert-Butylhydroperoxid (TBHP) in Toluol unter heftigem Rühren zugetropft. Während der exothermen Reaktion wurde der Temperaturanstieg durch moderate Außenkühlung des Reaktionskolbens auf 60 °C begrenzt. Die zunächst homogene Reaktionslösung wurde während der Umsetzung aufgrund der Ausbildung zweier Phasen milchig trüb. Nach dem Ende der Zugabe wurde die Temperatur noch 1 h lang bei 60-65 °C gehalten. Danach wurden die Heizung und der Rührer abgeschaltet. Nach dem Abkühlen wurde die obere Phase abgetrennt und verworfen. Die zähflüssige untere Phase wurde im Vakuum allmählich auf 235 °C erhitzt, wobei die Aufheizrate so gewählt wurde, dass starkes Schäumen vermieden wurde. Anschließend wurde die heiße, viskose Schmelze abgekühlt und bei 50 °C in 300 ml Chloroform gelöst. Diese Lösung wurde in 1,5 I an ebenfalls auf 50 °C erwärmtem Ethanol gegossen, um das Produkt auszufällen. Nach dem Abkühlen wurde der Überstand abdekantiert und der zähe Bodenkörper in einen Rundkolben übergeführt, in dem er im Vakuum allmählich auf 235 °C erhitzt wurde. Diese Schmelze wurde anschließend in eine Stahlwanne gegossen, wo sie zu einem spröden, glasartigen Feststoff erstarrte, der nach dem Abkühlen mit einem Mörser zerkleinert wurde, wobei ein gelbliches Pulver (90 g) erhalten wurde.

Das ³¹P-NMR-Spektrum des so erhaltenen Produkts zeigte, dass der erfindungsgemäße Novolak (6) mit einer Reinheit von 98 % erhalten wurde.
¹H-NMR (CDCl₃) δ: 3,2-4,0 ppm (2H, CH₂); 6,2-8,1 ppm (11H, Ar-H).
³¹P-NMR (CDCl₃) δ: 6,7-7,6 ppm.
T_{g}: 126 °C
Zersetzungstemperatur: 310 °C

### Beispiel 7

### Modifizierung eines handelsüblichen Novolaks zum DOP-modifizierten Novolak (7)

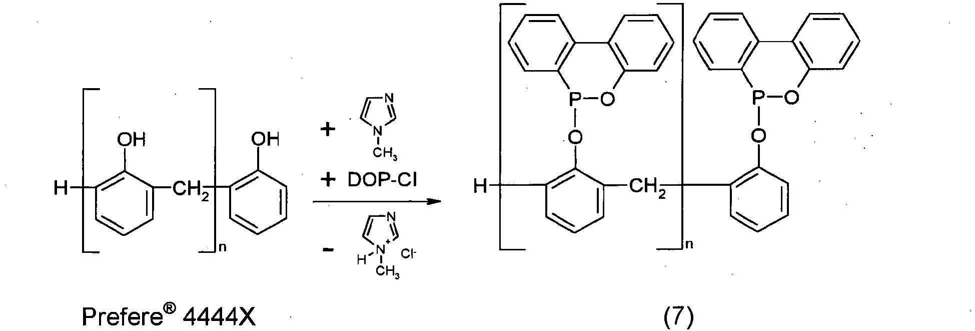

In einen mit Innenthermometer, Tropftrichter, Rührer und Inertgasüberleitung ausgerüsteten 500-ml-Dreihalsrundkolben wurden 32 g eines Phenol-Novolaks der Marke Prefere^{®} 4444X (DP = 17, n = 16; D = 3,76) - entsprechend 0,3 mol an freien OH-Gruppen - gefüllt. Dieser Ausgangs-Novolak wurde unter Vakuum und Rühren 1 h lang auf 180 °C erhitzt, um Spuren von Wasser und anderen flüchtigen Bestandteilen zu entfernen. Dann wurde die Temperatur auf 150 °C gesenkt und die Reaktionsapparatur mit Argon gefüllt. Anschließend wurden 25 g (0,3 mol) wasserfreies 1-Methylimidazol als Säurefänger zugesetzt. Nach dem Vermischen der beiden Substanzen wurde der Kolbeninhalt rührbar, wonach auf 105 °C abgekühlt wurde und 50 ml abs. Toluol unter Rühren langsam zugesetzt wurden, um eine weitere Abkühlung zu vermeiden. Danach wurde eine Lösung von 70,5 g (0,3 mol) DOP-CI in 85 ml abs. Toluol im Verlauf von 30 min unter heftigem Rühren zugetropft, wobei die Temperatur bei 110 °C gehalten wurde. Der weiterhin zweiphasige Kolbeninhalt wurde noch 75 min lang bei 90-100 °C gerührt, und dann wurden Heizung und Rührer abgestellt. Beim Abkühlen erstarrte die untere Phase aus 1-Methylimidazol-hydrochlorid zu einem festen Bodenkörper. Die überstehende Lösung wurde als solche in der nachfolgenden Reaktion eingesetzt.

¹H-NMR-Analyse dieses Novolaks der Erfindung ergab, dass etwa 97 % der OH-Gruppen DOP-funktionalisiert waren, während im ³¹P-NMR kein nichtumgesetztes DOP-CI mehr nachweisbar war. Das bedeutet, dass im Mittel jedes sechste Molekül des Novolaks (7) eine freie OH-Gruppe aufwies.
³¹P-NMR (CDCl₃) ö: 127-128 ppm; 132-134 ppm.

### Beispiel 8

### Oxidation von (7) zum DOPO-modifizierten Novolak (8) mit TBHP

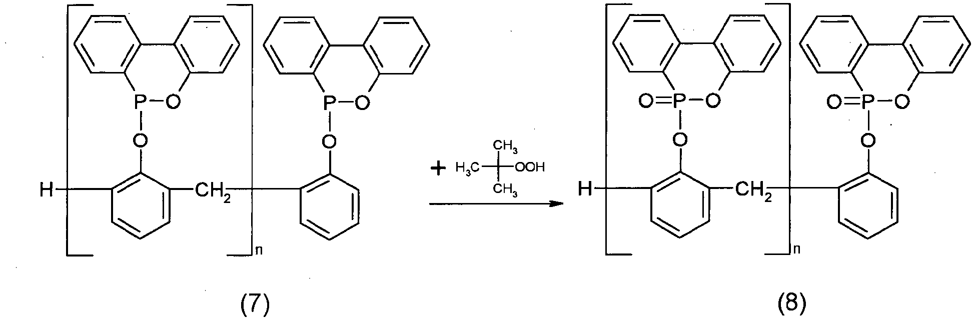

Die in Beispiel 7 erhaltene Lösung des DOP-modifizierten Novolaks (7) wurde unter Inertgas in einen mit Innenthermometer, Tropftrichter, Inertgasüberleitung, Rückflusskühler und Rührer ausgerüsteten 500-ml-Dreihalskolben übergeführt. Dann wurden im Verlauf von 45 min 68 g (0,3 mol) einer 40%igen Lösung von tert-Butylhydroperoxid (TBNP) in Toluol unter heftigem Rühren bei 75-80 °C zugetropft. Die zunächst homogene Reaktionslösung wurde während der Umsetzung aufgrund der Ausbildung zweier Phasen milchig trüb. Nach dem Ende der Zugabe wurde die Temperatur noch 1 h lang bei 80 °C gehalten. Danach wurden die Heizung und der Rührer abgeschaltet. Nach dem Abkühlen wurde die obere Phase abgetrennt und verworfen. Die zähflüssige untere Phase wurde im Vakuum allmählich auf 230 °C erhitzt, wobei die Aufheizrate so gewählt wurde, dass starkes Schäumen vermieden wurde. Anschließend wurde die heiße, viskose Schmelze abgekühlt und bei 50 °C in 300 ml Chloroform gelöst. Diese Lösung wurde in 1,5 I an ebenfalls auf 50 °C erwärmtem Ethanol gegossen, um das Produkt auszufällen. Nach dem Abkühlen wurde der Überstand abdekantiert und der zähe Bodenkörper in einen Rundkolben übergeführt, in dem er im Vakuum allmählich auf 250 °C erhitzt wurde. Diese Schmelze wurde anschließend in eine Stahlwanne gegossen, wo sie zu einem spröden, glasartigen Feststoff erstarrte, der nach dem Abkühlen mit einem Mörser zerkleinert wurde, wobei ein gelbliches Pulver (68 g) erhalten wurde.

Das ³¹P-NMR-Spektrum des so erhaltenen Produkts zeigte, dass der erfindungsgemäße Novolak (7) mit einer Reinheit von 99 % erhalten wurde.
¹H-NMR (DMSO-d₆) δ: 3,0-3,9 ppm (2H, CH₂); 6,1-8,2 ppm (11H, Ar-H).
³¹P-NMR (DMSO-d₆) δ: 6,98 ppm.
T_{g}: 157 °C
Zersetzungstemperatur: 305 °C

### Beispiel 9

### Modifizierung eines handelsüblichen Novolaks zum DOP-modifizierten Novolak (9)

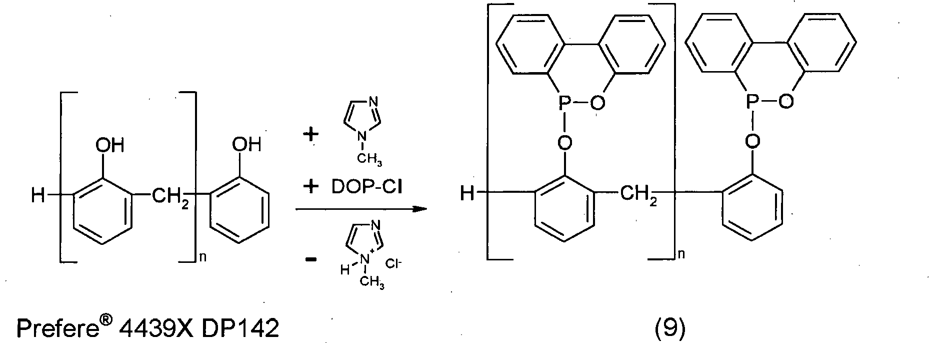

In einen mit Innenthermometer, Tropftrichter, Rührer und Inertgasüberleitung ausgerüsteten 2-I-Dreihalsrundkolben wurden 106 g eines Phenol-Novolaks der Marke Prefere^{®} 4439X DP142 (DP = 14, n = 13; D = 2,48) - entsprechend 0,5 mol an freien OH-Gruppen - gefüllt. Dieser Ausgangs-Novolak wurde unter Vakuum und Rühren 1,5 h lang auf 140 °C erhitzt, um Spuren von Wasser und freiem Phenol zu entfernen. Dann wurde die Temperatur auf 130 °C gesenkt und die Reaktionsapparatur mit Argon gefüllt. Anschließend wurden 82 g (1 mol) wasserfreies 1-Methylimidazol als Säurefänger zugesetzt. Nach dem Vermischen der beiden Substanzen wurde der Kolbeninhalt rührbar, wonach auf 90 °C abgekühlt wurde und 150 ml abs. Toluol unter Rühren langsam zugesetzt wurden, um eine weitere Abkühlung zu vermeiden. Danach wurde eine auf 60 °C erhitzte Lösung von 234,5 g (1 mol) DOP-CI in 300 ml abs. Toluol im Verlauf von 35 min unter heftigem Rühren zugetropft, wobei die Temperatur bei 90-95 °C gehalten wurde. Der weiterhin zweiphasige Kolbeninhalt wurde noch 75 min lang bei dieser Temperatur gerührt, und dann wurden Heizung und Rührer abgestellt. Beim Abkühlen erstarrte die untere Phase aus 1-Methylimidazol-hydrochlorid zu einem festen Bodenkörper. Die überstehende Lösung wurde als solche in der nachfolgenden Reaktion eingesetzt.

¹H-NMR-Analyse dieses Novolaks der Erfindung ergab, dass > 98 % der OH-Gruppen DOP-funktionalisiert waren, während im ³¹P-NMR kein nichtumgesetztes DOP-CI mehr nachweisbar war. Das bedeutet, dass im Mittel jedes achte Molekül des Novolaks (9) eine freie OH-Gruppe aufwies.
³¹P-NMR (CDCl₃) δ: 127-128 ppm; 132-134 ppm.

### Beispiel 10

### Oxidation von (9) zum DOPO-modifizierten Novolak (10) mit TBHP

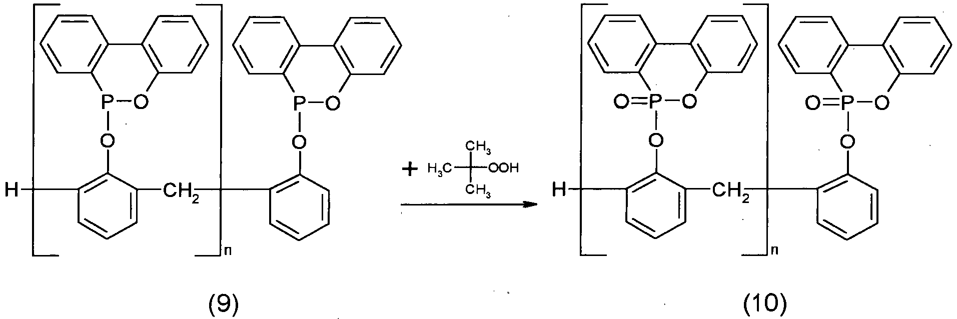

Die in Beispiel 9 erhaltene Lösung des DOP-modifizierten Novolaks (9) wurde unter Inertgas in einen mit Innenthermometer, Tropftrichter, Inertgasüberleitung, Rückflusskühler und Rührer ausgerüsteten 2-I-Dreihalskolben übergeführt. Dann wurden im Verlauf von 70 min 225 g (1 mol) einer 40%igen Lösung von tert-Butylhydroperoxid (TBHP) in Toluol unter heftigem Rühren bei 60-70 °C zugetropft. Die zunächst homogene Reaktionslösung wurde während der Umsetzung aufgrund der Ausbildung zweier Phasen milchig trüb. Nach dem Ende der Zugabe wurde die Temperatur noch 1 h lang bei 80 °C gehalten. Danach wurden die Heizung und der Rührer abgeschaltet. Nach dem Abkühlen wurde die obere Phase abgetrennt und verworfen. Die zähflüssige untere Phase wurde im Vakuum allmählich auf 230 °C erhitzt, wobei die Aufheizrate so gewählt wurde, dass starkes Schäumen vermieden wurde. Anschließend wurde die heiße, viskose Schmelze abgekühlt und bei 50 °C in 500 ml Chloroform gelöst. Diese Lösung wurde in 2,5 I an ebenfalls auf 50 °C erwärmtem Ethanol gegossen, um das Produkt auszufällen. Nach dem Abkühlen wurde der Überstand abdekantiert und der zähe Bodenkörper in einen Rundkolben übergeführt, in dem er im Vakuum allmählich auf 250 °C erhitzt wurde. Diese Schmelze wurde anschließend in eine Stahlwanne gegossen, wo sie zu einem spröden, glasartigen Feststoff erstarrte, der nach dem Abkühlen mit einem Mörser zerkleinert wurde, wobei ein gelbliches Pulver (194 g) erhalten wurde.

Das ³¹P-NMR-Spektrum des so erhaltenen Produkts zeigte, dass der erfindungsgemäße Novolak (10) mit einer Reinheit von 98 % erhalten wurde.
¹H-NMR (DMSO-d₆) δ: 3,0-4,0 ppm (2H, CH₂); 6,1-8,3 ppm (11 H, Ar-H).
³¹P-NMR (DMSO-d₆) δ: 6,95 ppm.
T_{g}: 137 °C
Zersetzungstemperatur: 300 °C

### Beispiel 11 - Flammschutztests

Zum Nachweis der Flammschutzeigenschaften der erfindungsgemäßen neuen Novolake wurden Tests mit Epoxidharzproben durchgeführt, die auf nachstehend beschriebene Weise hergestellt wurden.

### System A - Epoxidharzsystem DEN 438, DICY, Fenuron:

100 Teile des glycidierten Novolaks DEN 438 (DOW Chemicals), 6 Teile des Härtungsreagenzes DICY (Dyhard 100S), 2 Teile des Beschleunigers Fenuron (Dyhard UR 300) sowie die jeweilige Menge an erfindungsgemäßem Novolak, die erforderlich war, um einen bestimmten Phosphorgehalt im Harz zu erzielen, wurden 5 min lang bei 90 °C und 6000 U/min in einem Labordissolver (DISPERMAT; Fa. VMA-Getzmann GmbH) vermischt. Dann wurde die für eine Schichtdicke von 3 mm erforderliche Menge dieser Mischung in Aluminiumschalen gegossen. Zur Härtung wurden die Proben in einem Trockenschrank zunächst 1 h lang auf 110 °C, dann 1 h lang auf 130 °C und schließlich 2 h lang auf 200 °C erhitzt. Anschließend wurden die ausgehärteten Proben langsam auf Raumtemperatur abgekühlt. Aus den so erhaltenen Epoxidharzplatten wurden Probekörper (125 x 12,5 x 3 mm) für die UL-94-Tests herausgesägt.

### System B - Epoxidharzsystem RTM 6:

100 Teile RTM 6 (Hexcel Corporation) sowie die jeweilige Menge an erfindungsgemäßem Novolak, die erforderlich war, um einen bestimmten Phosphorgehalt im Harz zu erzielen, wurden 10 min lang bei 80 °C und 6000 U/min in einem Labordissolver (DISPERMAT; Fa. VMA-Getzmann GmbH) vermischt. Dann wurde die für eine Schichtdicke von 3 mm erforderliche Menge dieser Mischung in Aluminiumschalen gegossen. Zur Härtung wurden die Proben in einem Trockenschrank zunächst 1 h lang auf 80 °C, dann 30 min lang auf 160 °C und schließlich 1 h lang auf 200 °C erhitzt. Anschließend wurden die ausgehärteten Proben langsam auf Raumtemperatur abgekühlt. Aus den so erhaltenen Epoxidharzplatten wurden Probekörper (125 x 12,5 x 3 mm) für die UL-94-Tests herausgesägt.

### UL94-Tests

Bei UL94 handelt es sich um die Prüfvorschrift der Underwriters Laboratories, die inhaltsgleich in die IEC/DIN EN 60695-11-10 und -20 übernommen wurde. Dabei wirken Zündflammen mit einer Leistung von 50 W zweimal kurzzeitig auf den Probenkörper ein, wobei bei der Vertikalprüfung die Brennzeit und das Abfallen brennender Teile mithilfe eines unterhalb des Probenkörpers angeordneten Wattebauschs bewertet werden. Die Klassifizierung erfolgt in den Stufen "V0", "V1" und "V2", die in nachstehender Tabelle 1 erläutert werden:

**Tabelle 1: UL94-Klassifizierung**

| Klassifizierung | **V0** | **V1** | **V2** |
|---|---|---|---|
| Nachbrennzeit nach jeder Beflammung | ≤ 10 s | ≤ 30 s | ≤ 30 s |
| Gesamtbrenndauer je Satz (10 Beflammungen) | ≤ 50 s | ≤ 250 s | ≤ 250 s |
| Nachbrennzeit/Nachglühen nach der 2. Beflammung | ≤ 30 s | ≤ 60 s | ≤ 60 s |
| Abbrand bis zur Haltekammer | nein | nein | nein |
| Entzündung der Watte | nein | nein | ja |

Die Klassifizierung "V0" stellt demnach die höchste Anforderung beim Brandschutz dar und ist daher beim Einsatz von Flammschutzzusammensetzungen anzustreben.

In der nachstehenden Tabelle 2 sind die Ergebnisse der Prüfung für die erfindungsgemäßen neuen Novolake sowie für DOPO als Vergleichssubstanz angegeben

**Tabelle 2**

| **Flammschutzadditiv** | **EpoxidharzSystem** | **Phosphorgehalt (Gew.-%)** | **UL94-Klassifizierung** |
|---|---|---|---|
| keines | A | 0,0 | nicht klassifiziert |
| keines | B | 0,0 | nicht klassifiziert |
| | | | |
| Vergl.: DOPO | A | 1,0 | nicht klassifiziert |
| Vergl.: DOPO | A | 1,2 | V1 |
| Vergl.: DOPO | A | 1,4 | V1 |
| Vergl.: DOPO | A | 1,6 | V0 |
| | | | |
| DOP-mod. Novolak (1) | A | 1,0 | V1-V0 |
| DOP-mod. Novolak (1) | A | 1,5 | V0 |
| | | | |
| DOPO-mod. Novolak (2) | A | 1,5 | V0 |
| DOPO-mod. Novolak (2) | B | 1,5 | V0 |
| | | | |
| DOPO-mod. Novolak (3) | A | 1,5 | V0 |
| | | | |
| DOPS-mod. Novolak (4) | A | 0,5 | V1 |
| DOPS-mod. Novolak (4) | A | 1,0 | V0 |
| | | | |
| DOPO-mod. Novolak (6) | A | 1,5 | V1-V0 |
| | | | |
| DOPO-mod. Novolak (8) | A | 1,5 | V1 |
| | | | |
| DOPO-mod. Novolak (10) | A | 1,5 | V1 |
| | | | |
| DOPS-mod. Novolak (4) + BBDS im Gewichtsverhältnis 1:1 | A | 0,5 | V0 |

Aus Tabelle 2 geht klar hervor, dass alle getesteten neuen Novolake der Erfindung in Epoxidharzsystemen Flammschutzwirkung zeigten, unabhängig davon, ob es sich um DOP-, DOPO- oder DOPS-modifizierte Novolake handelte. Am besten schnitt der DOPO-Novolak (4) ab, der schon in sehr geringen Mengen (0,5 % P-Gehalt, d.h. etwa 5 Gew.-%) für wirksamen Flammschutz sorgte und dabei deutlich bessere Wirkung zeigte als die Vergleichssubstanz DOPO. Diese Wirkung ließ sich durch Zusatz von BBDS (ebenfalls etwa 5 Gew.-%) als Synergist sogar noch steigern. Tendenziell schienen kürzerkettige Novolake wirksamer zu sein als solche mit höherem DP, was - ohne sich auf eine Theorie festlegen zu wollen - auf eine bessere Verteilung im Epoxidharz zurückzuführen sein dürfte.

Darüber hinaus wurde festgestellt, dass der Zusatz der erfindungsgemäßen Novolake nur relativ geringfügige Abnahmen der Glastemperaturen der Epoxide bewirken, wobei erneut der DOPS-modifizierte Novolak (4) am besten abschnitt. Hier war die T_{g} des Epoxidharzes bei Zusatz 10 Gew.-% von Novolak (4) gleich jener des reinen Harzsystems. Ein Zusatz von 5 Gew.-% bewirkte sogar einen leichten Anstieg der T_{g}.

Somit stellt die Erfindung neue modifizierte Novolake bereit, die sich als wirksame Flammschutzmittel erwiesen haben und als solche in verschiedenen Harzsystemen einsetzbar sind.

## Patentansprüche

1. Novolak, der mit 9,10-Dihydro-9-oxa-10-phosphaphenanthren (DOP) und/oder einem Derivat davon flammhemmend modifiziert ist und der nachstehenden Formel (I) entspricht: 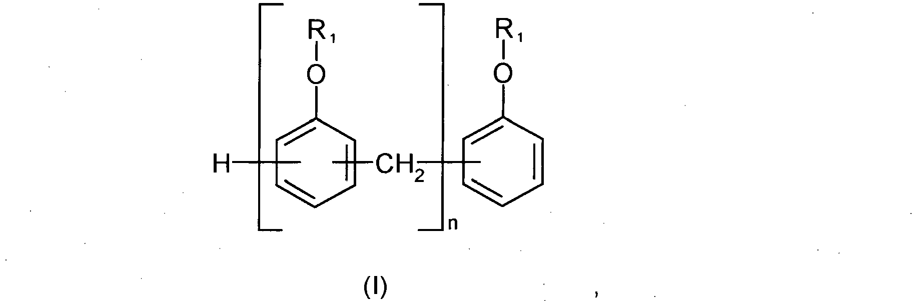 worin
die R₁ aus
i) Wasserstoff,
ii) einem DOP-Rest der Formel 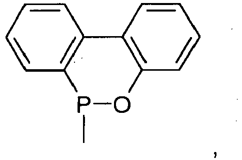
iii) einem DOPO-Rest der Formel 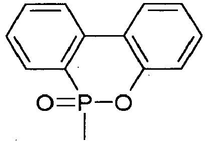 und
iv) einem DOPS-Rest der Formel 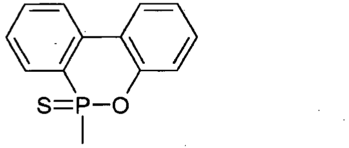 ausgewählt sind; und
n ≥ 2 ist;
wobei eine Vielzahl der Reste R₁ DOP-, DOPO- und/oder DOPS-Reste sind.

2. Novolak nach Anspruch 1, **dadurch gekennzeichnet, dass** im Wesentlichen alle Reste R₁ DOP-, DOPO- und/oder DOPS-Reste sind.

3. Novolak nach Anspruch 1 oder 2, **dadurch gekennzeichnet, dass** im Wesentlichen alle Reste R₁, die nicht Wasserstoff sind, DOPO- oder DOPS-Reste sind.

4. Novolak nach Anspruch 3, **dadurch gekennzeichnet, dass** im Wesentlichen alle Reste R₁ DOPO- oder DOPS-Reste sind.

5. Novolak nach einem der vorangegangenen Ansprüche, **dadurch gekennzeichnet, dass** n = 4 bis 100, vorzugsweise 5 bis 50, noch bevorzugter 6 bis 30, ist.

6. Novolak nach einem der vorangegangenen Ansprüche, **dadurch gekennzeichnet, dass** einer oder mehrere der aromatischen Ringe der DOP-, DOPO- bzw. DOPS-Reste und/oder des damit modifizierten Novolaks mit einem oder mehreren Substituenten substituiert sind, die aus der aus Halogenen, C₁₋₄-Alkyl, C₁₋₄-Alkoxy, C₁₋₄-Alkylcarbonyl, C₁₋₆-Aryl, C₁₋₄-Alkyl-C₁₋₆-aryl, C₁₋₆-Aryl-C₁₋₄-alkyl, Formyl, Amino, Ammonio, C₁₋₄-Alkylamino, Di-C₁₋₄-alkylamino, Carboxyl, Carbamoyl, Sulfo und Phosphono bestehenden Gruppe ausgewählt sind.

7. Verfahren zur Herstellung von flammhemmend modifizierten Novolaken nach einem der Ansprüche 1 bis 6 durch Umsetzung eines Ausgangs-Novolaks mit 10-Chlor-9,10-dihydro-9-oxa-10-phosphaphenanthren (DOP-CI), wobei ein Molverhältnis zwischen DOP-CI und den Molekülen des Ausgangs-Novolaks von zumindest 2:1 eingesetzt wird, um einen DOP-modifizierten Novolak mit zumindest zwei DOP-Resten pro Molekül zu erhalten.

8. Verfahren nach Anspruch 7, **dadurch gekennzeichnet, dass** der Ausgangs-Novolak mit einer molaren Menge an DOP-CI umgesetzt wird, die der Menge an OH-Gruppen des Ausgangs-Novolaks im Wesentlichen entspricht.

9. Verfahren nach Anspruch 8, **dadurch gekennzeichnet, dass** die molare Menge an DOP-CI um nicht mehr als 2 Mol-% unter der Menge an OH-Gruppen des Ausgangs-Novolaks liegt.

10. Verfahren nach einem der Ansprüche 7 bis 9, **dadurch gekennzeichnet, dass** ein Säurefänger für die frei werdende HCl eingesetzt wird.

11. Verfahren nach Anspruch 10, **dadurch gekennzeichnet, dass** als Säurefänger 1-Methylimidazol eingesetzt wird.

12. Verfahren nach einem der Ansprüche 7 bis 11, **dadurch gekennzeichnet, dass** als Lösungsmittel wasserfreies Toluol eingesetzt wird.

13. Verfahren nach einem der Ansprüche 7 bis 12, **dadurch gekennzeichnet, dass** der so erhaltene DOP-modifizierte Novolak mit einem Oxidationsmittel umgesetzt wird, um die DOP-Reste zu DOPO- oder DOPS-Resten zu oxidieren.

14. Verfahren nach Anspruch 13, **dadurch gekennzeichnet, dass** als Oxidationsmittel ein Peroxid eingesetzt wird, um die DOP-Reste zu DOPO-Resten zu oxidieren.

15. Verfahren nach Anspruch 14, **dadurch gekennzeichnet, dass** als Oxidationsmittel t-Butylhydroperoxid eingesetzt wird.

16. Verfahren nach Anspruch 13, **dadurch gekennzeichnet, dass** als Oxidationsmittel elementarer Schwefel eingesetzt wird, um die DOP-Reste zu DOPS-Resten zu oxidieren.

17. Verwendung eines Novolaks nach einem der Ansprüche 1 bis 6 als Flammschutzmittel.

18. Verwendung nach Anspruch 17, **dadurch gekennzeichnet, dass** der Novolak als Flammschutzmittel für Kunststoffe eingesetzt wird.

19. Verwendung nach Anspruch 18, **dadurch gekennzeichnet, dass** der Novolak als Flammschutzmittel für Epoxidharze eingesetzt wird.

20. Verwendung nach einem der Ansprüche 17 bis 19, **dadurch gekennzeichnet, dass** der Novolak zusammen mit einem oder mehreren Synergisten und/oder zusätzlichen Flammschutzmitteln eingesetzt wird.

## Claims

1. Novolac which has been modified to be flame-retardant using 9,10-dihydro-9-oxa-10-phosphapheanthrene (DOP) and/or a derivative thereof and corresponds to the following formula (I): 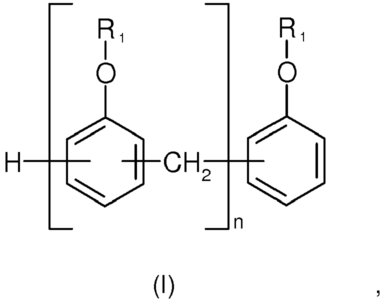 in which
R₁ is selected from
i) hydrogen,
ii) a DOP group of formula 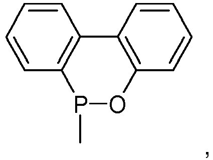
iii) a DOPO group of formula 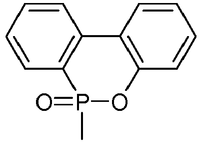 and
iv) a DOPS group of formula 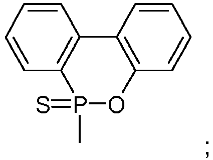 and
n ≥ 2;
wherein a plurality of the R₁ groups are DOP, DOPO and/or DOPS groups.

2. Novolac according to claim 1, **characterised in that** substantially all R₁ groups are DOP, DOPO and/or DOPS groups.

3. Novolac according to claim 1 or 2, **characterised in that** substantially all R₁ groups that are not hydrogen are DOPO or DOPS groups.

4. Novolac according to claim 3, **characterised in that** substantially all R₁ groups are DOPO or DOPS groups.

5. Novolac according to one of the preceding claims, **characterised in that** n = 4 to 100, preferably 5 to 50, even more preferably 6 to 30.

6. Novolac according to one of the preceding claims, **characterised in that** one or more of the aromatic rings of the DOP, DOPO or DOPS groups and/or of the novolac modified thereby are substituted with one or more substituents selected from the group consisting of halogens, C₁₋₄ alkyl, C₁₋₄ alkoxy, C₁₋₄ alkylcarbonyl, C₁₋₆ aryl, C₁₋₄ alkyl-C₁₋₆ aryl, C₁₋₆ aryl-C₁₋₄ alkyl, formyl, amino, ammonio, C₁₋₄ alkylamino, Di-C₁₋₄ alkylamino, carboxyl, carbamoyl, sulfo and phosphono.

7. A method for producing novolacs modified to be flame-retardant according to one of claims 1 to 6 by reacting a starting novolac with 10-chloro-9,10-dihydro-9-oxa-10-phosphaphenanthrene (DOP-CI), wherein a molar ratio between DOP-CI and the molecules of the starting novolac of at least 2:1 is used in order to obtain a DOP-modified novolac having at least two DOP groups per molecule.

8. The method according to claim 7, **characterised in that** the starting novolac is reacted with a molar quantity of DOP-CI corresponding substantially to the quantity of OH groups of the starting novolac.

9. The method according to claim 8, **characterised in that** the molar quantity of DOP-CI is no more than 2 mol % below the quantity of OH groups of the starting novolac.

10. The method according to one of claims 7 to 9, **characterised in that** an acid scavenger is used for the released HCl.

11. The method according to claim 10, **characterised in that** 1-methylimidazole is used as acid scavenger.

12. The method according to one of claims 7 to 11, **characterised in that** anhydrous toluene is used as solvent.

13. The method according to one of claims 7 to 12, **characterised in that** the DOP-modified novolac thus obtained is reacted with an oxidising agent in order to oxidise the DOP groups to form DOPO or DOPS groups.

14. The method according to claim 13, **characterised in that** a peroxide is used as oxidising agent in order to oxidise the DOP groups to form DOPO groups.

15. The method according to claim 14, **characterised in that** t-butyl hydroperoxide is used as oxidising agent.

16. The method according to Claim 13, **characterised in that** elementary sulphur is used as oxidising agent in order to oxidise the DOP groups to form DOPS groups.

17. Use of a novolac according to one of claims 1 to 6 as a flame retardant.

18. The use according to claim 17, **characterised in that** the novolac is used as a flame retardant for plastics.

19. The use according to claim 18, **characterised in that** the novolac is used as a flame retardant for epoxy resins.

20. The use according to one of claims 17 to 19, **characterised in that** the novolac is used together with one or more synergists and/or additional flame retardants.

## Revendications

1. Novolaque laquelle a subi une modification ignifugeante avec le 9,10-dihydro-9-oxa-10-phosphaphénanthrène (DOP) et/ou un dérivé de ce dernier et laquelle correspond à la formule (I) suivante : 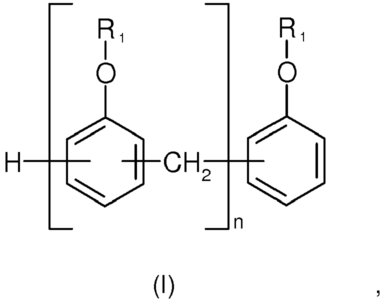 dans laquelle
R₁ est choisi parmi
i) l'hydrogène,
ii) un radical DOP de formule 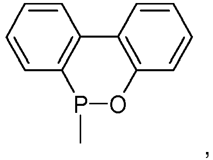
iii) un radical DOPO de formule 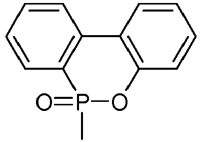 et
iv) un radical DOPS de formule 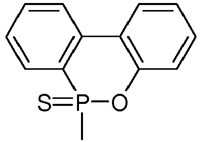 et
n est ≥ 2;
une pluralité de radicaux R₁ étant des radicaux DOP, DOPO et/ou DOPS.

2. Novolaque selon la revendication 1, **caractérisée en ce que** sensiblement tous les radicaux R₁ sont des radicaux DOP, DOPO et/ou DOPS.

3. Novolaque selon les revendications 1 ou 2, **caractérisé en ce que** sensiblement tous les radicaux R₁, sauf ceux représentant un hydrogène, sont des radicaux DOPO ou DOPS.

4. Novolaque selon la revendication 3, **caractérisée en ce que** sensiblement tous les radicaux R₁ sont des radicaux DOPO ou DOPS.

5. Novolaque selon l'une des revendications précédentes, **caractérisée en ce que** n = 4 à 100, de préférence 5 à 50, de manière encore préférée 6 à 30.

6. Novolaque selon l'une des revendications précédentes, **caractérisée en ce qu'**un ou plusieurs des cycles aromatiques des radicaux DOP, DOPO ou DOPS, et/ou de la novolaque modifiée avec ses derniers, sont substitués avec un ou plusieurs substituants choisis dans le groupe constitué des halogènes, de C₁₋₄-alkyle, C₁₋₄-alkoxy, C₁₋₄-alkylcarbonyle, C₁₋₆-aryle, C₁₋₄-alkyl-C₁₋₆-aryle, C₁₋₆-aryl-C₁₋₄-alkyle, formyle, amino, ammonio, C₁₋₄-alkylamino, di-C₁₋₄-alkylamino, carboxyle, carbamoyle, sulfo et de phosphono.

7. Procédé de préparation de novolaques ayant subi une modification ignifugeante selon l'une des revendications 1 à 6, en faisant réagir une novolaque de départ avec du 10-chloro-9,10-dihydro-9-oxa-10-phosphaphénanthrène (DOP-CI), le rapport molaire entre le DOP-CI et les molécules de la novolaque de départ étant au moins égal à 2:1, pour ainsi obtenir une novolaque modifié au DOP laquelle comporte au moins deux radicaux DOP par molécule.

8. Procédé selon la revendication 7, **caractérisé en ce que** l'on fait réagir la novolaque de départ avec une quantité molaire de DOP-CI correspondant sensiblement à la quantité de groupes OH de la novolaque de départ.

9. Procédé selon la revendication 8, **caractérisé en ce que** la quantité molaire de DOP-CI n'est inférieure à la quantité de groupes OH de la novolaque de départ que de 2 % en moles au maximum.

10. Procédé selon l'une des revendications 7 à 9, **caractérisé en ce que** l'on met en oeuvre un accepteur d'acide pour le HCl libéré.

11. Procédé selon la revendication 10, **caractérisé en ce que** l'accepteur d'acide mis en oeuvre est le 1-méthylimidazole.

12. Procédé selon l'une des revendications 7 à 11, **caractérisé en ce que** l'on met en oeuvre, en tant que solvant, du toluène anhydre.

13. Procédé selon l'une des revendications 7 à 12, **caractérisé en ce que** la novolaque modifiée au DOP ainsi obtenue est soumise à une réaction avec un agent oxydant, pour oxyder les radicaux DOP de manière à obtenir des radicaux DOPO ou DOPS.

14. Procédé selon la revendication 13, **caractérisé en ce que** l'on met en oeuvre, en tant qu'agent oxydant, un peroxyde permettant d'oxyder les radicaux DOP de manière à obtenir des radicaux DOPO.

15. Procédé selon la revendication 14, **caractérisé en ce que** l'on met oeuvre, en tant qu'agent oxydant, le t-butylhydroperoxyde.

16. Procédé selon la revendication 13, **caractérisé en ce que** l'on met en oeuvre, en tant qu'agent oxydant, du soufre élémentaire permettant d'oxyder les radicaux DOP de manière à obtenir des radicaux DOPS.

17. Utilisation d'une novolaque selon l'une des revendication 1 à 6 en tant qu'agent ignifuge.

18. Utilisation selon la revendication 17, **caractérisée en ce que** ladite novolaque est mise en oeuvre en tant qu'agent ignifuge pour des matières plastiques.

19. Utilisation selon la revendication 18, **caractérisée en ce que** ladite novolaque est mise en oeuvre en tant qu'agent ignifuge pour des résines époxy.

20. Utilisation selon l'une des revendications 17 à 19, **caractérisée en ce que** ladite novolaque est mise en oeuvre en association avec un ou plusieurs agents à action synergique et/ou des agents ignifuges supplémentaires.
